# EUROPÄISCHE PATENTANMELDUNG

(11) **EP 3 002 479 A1**
(43) Veröffentlichungstag der Anmeldung: **06.04.2016**
(21) Anmeldenummer: 15178983.1
(22) Anmeldetag: 30.07.2015
(51) Int. Cl.: F16F 15/14

(54) **FLIEHKRAFTPENDEL**

(30) Priorität: 29.08.2014 DE 102014217251
(71) Anmelder: Schaeffler Technologies AG & Co. KG, 91074 Herzogenaurach (DE)
(72) Erfinder: Wahl, Peter, 76744 Wörth-Maximiliansau (DE)

(57) **Zusammenfassung**

Die Erfindung betrifft ein Fliehkraftpendel (10), das drehbar um eine Drehachse (15) lagerbar ist, wobei das Fliehkraftpendel eine erste Pendelmasse (20), eine zweite Pendelmasse (25), einen Pendelflansch (30) und eine Koppeleinrichtung (35) umfasst, wobei die erste Pendelmasse (20) in Umfangsrichtung angrenzend an die zweite Pendelmasse (25) angeordnet ist, wobei die erste Pendelmasse (20) und die zweite Pendelmasse (25) beschränkt beweglich mit dem Pendelflansch (30) gekoppelt sind, wobei die Koppeleinrichtung (35) zwischen der ersten Pendelmasse (20) und der zweiten Pendelmasse (25) zur Koppelung der ersten Pendelmasse (20) mit der zweiten Pendelmasse (25) angeordnet ist, wobei die Koppeleinrichtung (35) wenigstens ein Federelement (75) umfasst, wobei ein erstes Längsende (110) des Federelements (75) an der ersten Pendelmasse (20) und ein zweites Längsende (120) an der zweiten Pendelmasse (25) anliegt, wobei ein erster Querschnitt des Federelements (75) an wenigstens einem der beiden Längsenden (110, 120) größer ist als ein zweiter Querschnitt zwischen den beiden Längsenden.

## Beschreibung

Die Erfindung betrifft ein Fliehkraftpendel gemäß Patentanspruch 1 und 2.

Es sind zahlreiche Fliehkraftpendel in unterschiedlichen Ausgestaltungen bekannt. So weisen üblicherweise Fliehkraftpendel einen Pendelflansch und mittels einer Führungseinrichtung gekoppelte Pendelmassen auf. Die Führungseinrichtung führt die Pendelmasse entlang einer vorbestimmten Pendelbahn. Die Pendelmassen dienen dazu, Drehungleichförmigkeiten in einem Antriebssystem zu übertragenden Drehmoment zumindest teilweise zu tilgen, sodass das Antriebssystem besonders leise und bei niedrigen Drehzahlen betrieben werden kann. Die Pendelmassen werden durch die Drehungleichförmigkeit zum Pendeln entlang der Pendelbahn angeregt, wobei die Pendelmassen als Energiespeicher dienen und zeitversetzt zur Drehungleichförmigkeit schwingen.

Es ist Aufgabe der Erfindung, ein verbessertes Fliehkraftpendel bereitzustellen.

Diese Aufgabe wird mittels eines Fliehkraftpendels gemäß Patentanspruch 1 gelöst. Vorteilhafte Ausführungsformen sind in den abhängigen Ansprüchen angegeben.

Erfindungsgemäß wurde erkannt, dass ein verbessertes Fliehkraftpendel dadurch bereitgestellt werden kann, dass das Fliehkraftpendel um eine Drehachse drehbar ist. Das Fliehkraftpendel weist eine erste Pendelmasse, eine zweite Pendelmasse, einen Pendelflansch und eine Koppeleinrichtung auf. Die erste Pendelmasse ist in Umfangsrichtung angrenzend an die zweite Pendelmasse angeordnet. Die erste Pendelmasse und die zweite Pendelmasse sind beschränkt beweglich mit dem Pendelflansch gekoppelt. Die Koppeleinrichtung ist zwischen der ersten Pendelmasse und der zweiten Pendelmasse zur Kopplung der ersten Pendelmasse mit der zweiten Pendelmasse angeordnet. Die Koppeleinrichtung umfasst wenigstens ein Federelement. Ein erstes Längsende des Federelements liegt an der ersten Pendelmasse und ein zweites Längsende liegt an der zweiten Pendelmasse an. Ein erster Querschnitt des Federelements an wenigstens einem der beiden Längsenden ist größer als ein zweiter Querschnitt zwischen den beiden Längsenden.

Dadurch wird vermieden, dass das Federelement beim Einfedern an der Pendelmasse anliegt und somit verschleißfrei und reibungsfrei federn kann.

Die Aufgabe wird aber auch durch ein Fliehkraftpendel gemäß Patentanspruch 2 gelöst. Vorteilhafte Ausführungsformen sind in den abhängigen Ansprüchen angegeben.

Erfindungsgemäß wurde erkannt, dass ein verbessertes Fliehkraftpendel dadurch bereitgestellt werden kann, dass das Fliehkraftpendel drehbar um eine Drehachse gelagert ist und eine erste Pendelmasse, eine zweite Pendelmasse, einen Pendelflansch und eine Koppeleinrichtung aufweist. Die erste Pendelmasse ist in Umfangsrichtung angrenzend an die zweite Pendelmasse angeordnet. Die erste Pendelmasse und die zweite Pendelmasse sind beschränkt beweglich mit dem Pendelflansch gekoppelt. Die Koppeleinrichtung ist zwischen der ersten Pendelmasse und der zweiten Pendelmasse zur Kopplung der ersten Pendelmasse mit der zweiten Pendelmasse angeordnet. Die Koppeleinrichtung weist wenigstens ein Federelement auf. Die Koppeleinrichtung weist in der ersten Pendelmasse und/oder in der zweiten Pendelmasse eine Aufnahme auf. Die Aufnahme nimmt zumindest teilweise das Federelement auf. Die Aufnahme ist zumindest teilweise in axialer Richtung geschlossen ausgebildet.

Dadurch wird vermieden, dass das Federelement in axialer Richtung aus der Pendelmasse herausfallen kann.

In einer weiteren Ausführungsform weist das Federelement einen ersten Abschnitt und einen zweiten Abschnitt auf, wobei der erste Abschnitt an das Längsende angrenzt und der zweite Abschnitt angrenzend an den ersten Abschnitt angeordnet ist. Jeder Abschnitt weist mehrere Windungen auf. Die Windungen im ersten Abschnitt liegen in Umfangsrichtung aneinander an. Die Windungen im zweiten Abschnitt sind in Umfangsrichtung beabstandet zueinander angeordnet. Dadurch wird gewährleistet, dass ausschließlich das Federelement im zweiten Abschnitt einfedern kann, sodass eine Reibung der Windungen in der Aufnahme vermieden werden kann.

In einer weiteren Ausführungsform sind im ersten Abschnitt die Windungen zumindest abschnittsweise spiralförmig ausgebildet, wobei im zweiten Abschnitt die Windungen im Wesentlichen schraubenförmig ausgebildet sind.

In einer weiteren Ausführungsform umfasst die erste und/oder die zweite Pendelmasse ein Pendelmassenteil und ein weiteres Pendelmassenteil. Das Pendelmassenteil und das weitere Pendelmassenteil sind beidseitig des Pendelflanschs angeordnet und mittels eines Verbindungselements miteinander verbunden. Die Aufnahme weist im Pendelmassenteil einen Aufnahmeabschnitt und im weiteren Pendelmassenteil einen weiteren Aufnahmeabschnitt auf. Die Aufnahmeabschnitte sind axial gegenüberliegend angeordnet. Zwischen den Aufnahmeabschnitten weist der Pendelflansch eine Aussparung auf. Das Federelement durchgreift die Aussparung und greift in die Aufnahmeabschnitte ein.

In einer weiteren Ausführungsform ist das Verbindungselement benachbart zu der Aufnahme angeordnet, wobei vorzugsweise das Verbindungselement radial außenseitig und/oder radial innenseitig angrenzend an die Aufnahme angeordnet ist, wobei vorzugsweise das Verbindungselement in Umfangsrichtung angrenzend an die Aufnahme angeordnet ist. Dadurch kann eine Verklemmung des Federelements in der Aufnahme durch das Verbindungselement zusätzlich bereitgestellt werden. Ferner verhindert das Verbindungselement ein Aufbiegen der Aufnahme beim Einpressen des Federelements in die Aufnahme.

In einer weiteren Ausführungsform weist die erste und/oder zweite Pendelmasse eine in axialer Richtung verlaufende Öffnung auf. Die Öffnung ist ausgebildet, sich während der Herstellung der Koppeleinrichtung in ihrem Querschnitt zu verformen. Dabei ist von besonderem Vorteil, wenn die Öffnung angrenzend an der Aufnahme angeordnet ist. Auf diese Weise wird gewährleistet, dass die Aufnahme mittels eines Prägeprozesses in die Pendelmasse eingebracht werden kann und ein Fließen des Materials der Pendelmasse durch die Öffnung aufgenommen werden kann, so dass die Außenkontur der Pendelmasse erhalten werden kann. Dadurch kann das Fliehkraftpendel besonders kostengünstig hergestellt werden.

In einer weiteren Ausführungsform weist die Aufnahme einen in Umfangsrichtung die Aufnahme begrenzenden Aufnahmegrund und einen in axialer Richtung die Aufnahme begrenzenden Aufnahmesteg auf. An dem Aufnahmegrund liegt das Längsende des Federelements an und dem Aufnahmesteg ist eine Umfangsfläche des Federelements zugewandt. Zwischen dem Aufnahmegrund und dem Aufnahmesteg ist eine weitere Aussparung angeordnet. Auf diese Weise wird vermieden, dass beim Einprägen der Aufnahme ein Material unkontrolliert fließt und somit die Pendelmasse eine undefinierte Form aufweist. Das Material kann dabei in die weitere Aussparung fließen, sodass eine Masse der Pendelmasse erhalten wird und das Material, das geflossen ist, nicht abgetrennt werden muss.

In einer weiteren Ausführungsform weist der Aufnahmesteg einen ersten Stegabschnitt und wenigstens einen zweiten Stegabschnitt auf. Der erste Stegabschnitt ist mit der ersten oder der zweiten Pendelmasse verbunden. Der zweite Stegabschnitt ist radial angrenzend an den ersten Stegabschnitt angeordnet. In Umfangsrichtung ist der zweite Stegabschnitt breiter ausgebildet als der erste Stegabschnitt. Vorzugsweise ist in axialer Richtung der zweite Stegabschnitt schmaler ausgebildet als der erste Stegabschnitt. Dadurch wird eine besonders gute Anpassung der Aufnahme an die Ausgestaltung des Federelements erreicht.

In einer weiteren Ausführungsform weist das Federelement in gestauchtem Zustand eine Blocklänge auf. Die Koppeleinrichtung weist in der ersten Pendelmasse die Aufnahme und in der zweiten Pendelmasse eine weitere Aufnahme auf. Die Aufnahmen sind in Umfangsrichtung gegenüberliegend angeordnet. Die Aufnahme weist einen Aufnahmegrund und die weitere Aufnahme einen weiteren Aufnahmegrund auf. Ein Minimalabstand der Aufnahmegründe zueinander ist größer als die Blocklänge. Dadurch wird vermieden, dass Seitenflächen der Pendelmassen im maximal ausgelenkten Schwingwinkel aneinander anschlagen und so das Fliehkraftpendel Geräusche produziert. Dadurch kann ein besonders leises Fliehkraftpendel bereitgestellt werden.

Nachfolgend wird die Erfindung anhand von Figuren näher erläutert. Dabei zeigen:
- Figur 1: eine Draufsicht auf ein Fliehkraftpendel gemäß einer ersten Ausführungsform;
- Figur 2: eine perspektivische Ansicht des in Figur 1 gezeigten Fliehkraftpendels;
- Figur 3: eine Explosionsdarstellung des in den Figuren 1 und 2 gezeigten Fliehkraftpendels;
- Figur 4: einen Ausschnitt einer perspektivischen Ansicht des in den Figuren 1 bis 3 gezeigten Fliehkraftpendels;
- Figur 5: einen Ausschnitt eines Längsschnitts durch das in den Figuren 1 bis 4 gezeigte Fliehkraftpendel;
- Figur 6: einen Ausschnitt eines Querschnitts durch das in den Figuren 1 bis 5 gezeigte Fliehkraftpendel;
- Figur 7: eine perspektivische Ansicht eines Federelements des in den Figuren 1 bis 6 gezeigten Fliehkraftpendels;
- Figur 8: eine Seitenansicht auf das in Figur 7 gezeigte Federelement;
- Figur 9: einen Ausschnitt einer perspektivischen Ansicht auf ein Pendelmassenteil des in den Figuren 1 bis 6 gezeigten Fliehkraftpendels;
- Figur 10: eine Draufsicht auf das in Figur 9 gezeigte Pendelmassenteil;
- Figur 11: eine perspektivische Ansicht des in den Figuren 1 bis 6 gezeigten Fliehkraftpendels in ausgelenktem Zustand;
- Figur 12: eine Draufsicht auf das in Figur 11 gezeigte Fliehkraftpendel;
- Figur 13: eine perspektivische Ansicht eines Fliehkraftpendels gemäß einer zwei ten Ausführungsform;
- Figur 14: eine Draufsicht auf ein Fliehkraftpendel gemäß einer dritten Ausführungsform;
- Figur 15: einen Ausschnitt eines Längsschnitts durch das in Figur 14 gezeigte Fliehkraftpendel;
- Figur 16: einen Ausschnitt einer perspektivischen Ansicht des in den Figuren 14 und 15 gezeigten Fliehkraftpendels;
- Figur 17: eine Draufsicht auf ein Pendelmassenteil des in den Figuren 14 bis 16 gezeigten Fliehkraftpendels;
- Figur 18: eine perspektivische Ansicht auf das in Figur 17 gezeigte Fliehkraftpen del; und
- Figur 19: eine Schnittansicht entlang einer in Figur 17 gezeigten Schnittebene B-B.

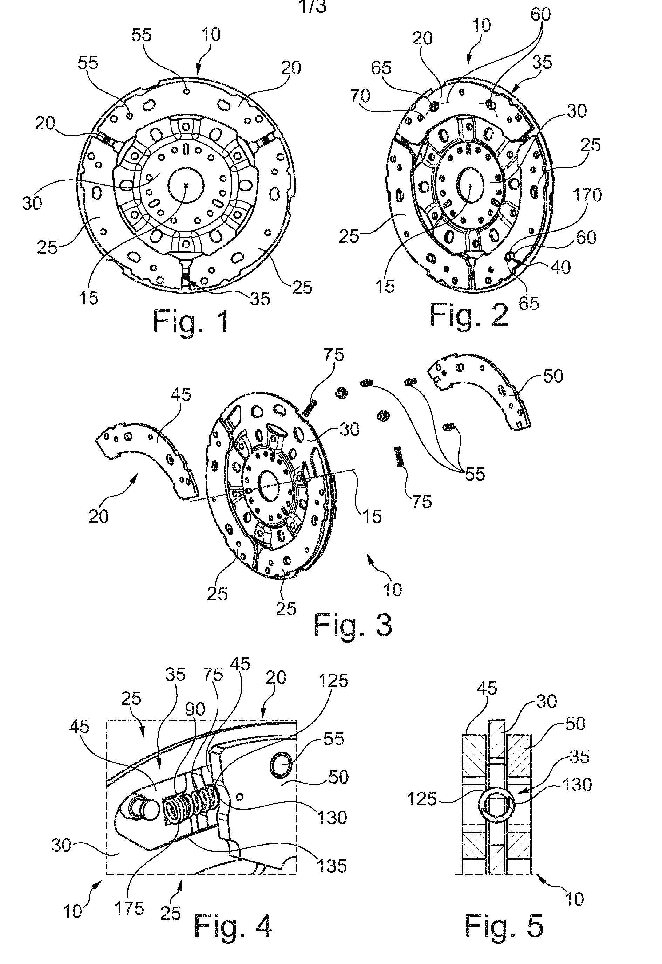

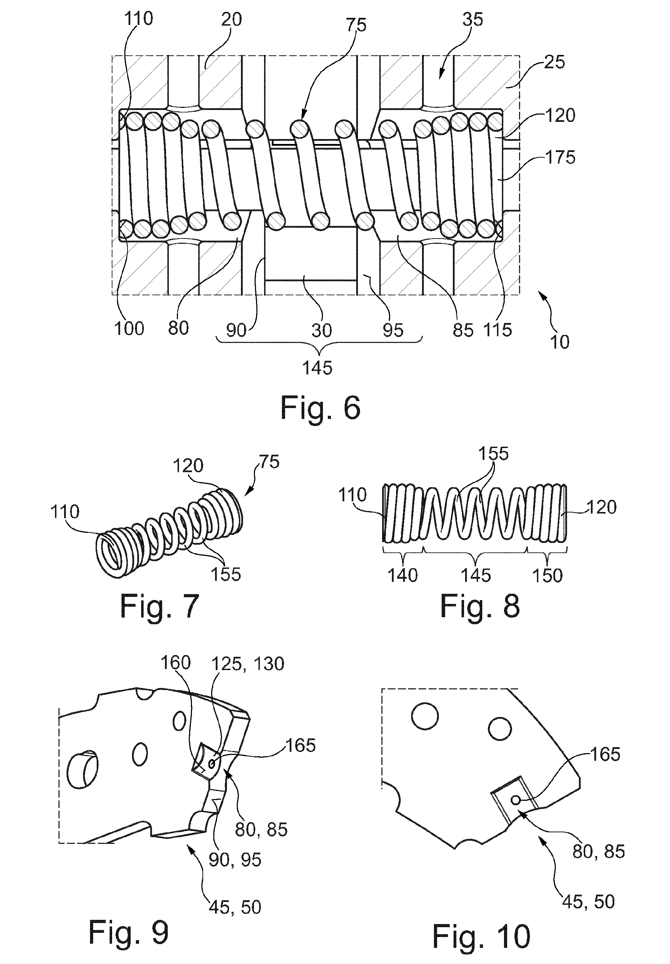

Figur 1 zeigt eine Draufsicht auf ein Fliehkraftpendel 10 gemäß einer ersten Ausführungsform. Figur 2 zeigt eine perspektivische Ansicht des in Figur 1 gezeigten Fliehkraftpendels 10 und Figur 3 zeigt eine Explosionsdarstellung des in den Figuren 1 und 2 gezeigten Fliehkraftpendels 10. Figur 4 zeigt einen Ausschnitt des in den Figuren 1 bis 3 gezeigten Fliehkraftpendels 10 und Figur 5 zeigt einen Ausschnitt eines Längsschnitts durch das in den Figuren 1 bis 4 gezeigte Fliehkraftpendel 10. Figur 6 zeigt einen Ausschnitt eines Querschnitts durch das in den Figuren 1 bis 5 gezeigte Fliehkraftpendel 10. Nachfolgend sollen die Figuren 1 bis 6 gemeinsam erläutert werden.

Das Fliehkraftpendel 10 ist drehbar um eine Drehachse 15 gelagert. Das Fliehkraftpendel 10 weist eine erste Pendelmasse 20 und mehrere zweite Pendelmassen 25 auf. Ferner umfasst das Fliehkraftpendel 10 einen Pendelflansch 30 und eine Koppeleinrichtung 35. Die Pendelmassen 20, 25 sind in Umfangsrichtung verteilt am Pendelflansch 30 angeordnet und mit diesem beschränkt beweglich mittels einer Führungseinrichtung 40 gekoppelt. Die Führungseinrichtung 40 kann dabei beispielsweise als Kulissenführung ausgebildet sein. Die Koppeleinrichtung 35 ist in Umfangsrichtung zwischen den beiden Pendelmassen 20, 25 angeordnet. Die Pendelmassen 20, 25 weisen jeweils ein erstes Pendelmassenteil 45 und ein zweites Pendelmassenteil 50 auf. Die beiden Pendelmassenteile 45, 50 sind beidseitig des Pendelflanschs 30 angeordnet und mittels Verbindungselemente 55, die in der Ausführungsform als Abstandsbolzen ausgebildet sind, verbunden.

Das Fliehkraftpendel 10 dient dazu, Drehungleichförmigkeiten in einem Antriebssystem, kommend von einem Hubkolbenmotor, zu dämpfen. Dabei führt die Führungseinrichtung 40 die Pendelmassen 20, 25 entlang einer durch die Führungseinrichtung 40 vordefinierten Pendelbahn 60. Die Pendelbahn 60 weist dabei eine Ruheposition 65 und eine ausgelenkte Position 70 auf, wobei die Ruheposition 65 diejenige Position der Pendelmassen 20, 25 ist, bei denen die Pendelmassen 20, 25 radial am außen liegendsten angeordnet sind. In ausgelenkten Positionen 70 ist die Pendelmasse 20, 25 bezogen auf die Ruheposition 65 radial weiter innen liegend angeordnet. Die Drehungleichförmigkeiten im Antriebssystem bewirken, dass die Pendelmassen 20, 25 aus der Ruheposition 65 ausgelenkt werden und als Energiespeicher zur Tilgung von Drehungleichförmigkeiten dienen. Die Koppeleinrichtung 35 dient dazu, die erste Pendelmasse 20 mit der zweiten Pendelmasse 25 zu koppeln. Ferner verhindert die Koppeleinrichtung 35, dass die Pendelmassen 20, 25, beispielsweise beim Abstellen des Hubkolbenmotors aneinander anschlagen. Dadurch kann durch die Koppeleinrichtung 35 ein besonders leises Fliehkraftpendel 10 bereitgestellt werden.

Die Koppeleinrichtung 35 weist ein Federelement 75 auf. Das Federelement 75 ist im Wesentlichen tangential zur Drehachse ausgerichtet. Ferner umfasst die Koppeleinrichtung 35 in der ersten Pendelmasse 20 eine erste Aufnahme 80 und in der zweiten Pendelmasse 25 eine zweite Aufnahme 85. Die Aufnahmen 80, 85 sind in Umfangsrichtung gegenüberliegend an jeweils gegenüberliegenden Seitenflächen 90, 95 der Pendelmassen 20, 25 angeordnet. Die Aufnahmen 80, 85 sind dabei topfartig tangential zur Drehachse 15 ausgebildet und in axialer Richtung zumindest teilweise geschlossen. Dadurch wird vermieden, dass das Federelement 75 in axialer Richtung aus den Aufnahmen 80, 85 herausfallen kann. Die erste Aufnahme 80 nimmt dabei abschnittsweise das Federelement 75 auf. Dabei umfasst die erste Aufnahme 80 einen ersten Aufnahmegrund 100, an dem sich ein erstes Längsende 110 des Federelements 75 anliegt und abstützt. Die zweite Aufnahme 85 weist einen zweiten Aufnahmegrund 115 auf, an dem sich ein zweites Längsende 120 des Federelements 75 anliegt und abstützt. Die Aufnahmen 80, 85 sind dabei zweiteilig ausgeführt. Dabei umfasst die Aufnahme 80, 85 jeweils einen im ersten Pendelmassenteil 45 angeordneten ersten Aufnahmeabschnitt 125 und einen im zweiten Pendelmassenteil 50 angeordneten zweiten Aufnahmeabschnitt 130. Die beiden Aufnahmeabschnitte 125, 130 sind axial gegenüberliegend angeordnet und vorzugsweise symmetrisch bezogen auf den Pendelflansch 30 ausgebildet. Die Aufnahmeabschnitte 125, 130 weisen dabei eine teilzylindrische Ausgestaltung auf, sodass sie in axialer Richtung auf einer zum Pendelflansch 30 abgewandten Seite der Pendelmassenteile 45, 50 axial geschlossen ausgebildet sind. Durch die im Wesentlichen teilzylindrische Ausgestaltung der Aufnahmeabschnitte 125, 130 können ferner Nachbearbeitungsschritte vermieden werden. Zwischen den beiden Aufnahmeabschnitten 125, 130 ist im Pendelflansch 30 eine Aussparung 135 vorgesehen. Die Aussparung 135 ist dabei derart ausgestaltet, dass das Federelement 75 bei der Pendelbewegung der Pendelmassen 20, 25 nicht in Berührkontakt mit dem Pendelflansch 30 tritt. Das Federelement 75 durchgreift die Aussparung 135 und greift beidseitig der Aussparung 135 in die Aufnahmeabschnitte 125, 130 ein.

Von besonderem Vorteil ist, wenn das Verbindungselement 55 benachbart zu der Aufnahme 80, 85 angeordnet ist, sodass ein unbeabsichtigtes Öffnen der Aufnahmen 80, 85 durch das Einpressen des jeweiligen Längsendes 110, 120 des Federelements 75 vermieden wird. Dabei ist von besonderem Vorteil, wenn das Verbindungselement 55 radial außenseitig und/oder innenseitig und/oder in Umfangsrichtung angrenzend an die Aufnahme 80, 85 angeordnet ist.

Figur 7 zeigt eine perspektivische Ansicht des Federelements 75 des in den Figuren 1 bis 6 gezeigten Fliehkraftpendels 10 und Figur 8 zeigt eine Seitenansicht des in Figur 7 gezeigten Federelements 75.

Das Federelement 75 weist einen ersten Abschnitt 140, einen zweiten Abschnitt 145 und einen dritten Abschnitt 150 auf. Der erste Abschnitt 140 grenzt dabei an das erste Längsende 110 des Federelements 75 an. Der dritte Abschnitt 150 grenzt an das zweite Längsende 120 des Federelements 75 an. Zwischen dem ersten Abschnitt 140 und dem dritten Abschnitt 150 ist der zweite Abschnitt 145 angeordnet. Das Federelement 75 weist jeweils in den Abschnitten 140, 145, 150 mehrere Windungen 155 auf. Die Windungen 155 sind dabei je nach Abschnitt 140, 145, 150 unterschiedlich ausgebildet. So sind beispielsweise im ersten Abschnitt 140 und im dritten Abschnitt 150 die Windungen 155 in tangentialer Richtung aneinander anliegend ausgebildet, sodass das Federelement 75 im ersten Abschnitt 140 keinen Federweg durchführen kann. Ferner sind die Windungen 155 im ersten Abschnitt 140 spiralförmig geführt.

Im zweiten Abschnitt 145 sind die Windungen 155 beabstandet zueinander angeordnet. Dadurch federt das Federelement 75 im zweiten Abschnitt 145. Ferner sind die Windungen 155 im zweiten Abschnitt 145 schraubenförmig ausgebildet. Dies hat zur Folge, dass das Federelement 75 im ersten Abschnitt 140 einen größeren Querschnitt aufweist als im zweiten Abschnitt 145. Dies hat zur Folge, dass die Windungen 155 umfangsseitig bei einem Einfedern oder auch in Ruheposition 65 keinen Berührkontakt mit der Aufnahme 80, 85 aufweisen.

Um das Federelement 75 in den Aufnahmen 80, 85 zu fixieren, weist wenigstens einer der beiden an das jeweilige Längsende 110, 120 angrenzenden Abschnitte 140, 150 einen ersten Querschnitt auf, der größer ist als ein zweiter Querschnitt des zweiten Abschnitts 145 zwischen den beiden Längsenden 110, 120. Dabei ist von besonderem Vorteil, wenn der erste Querschnitt des ersten Abschnitts 140 und/oder des dritten Abschnitt 150 zumindest teilweise ein Übermaß gegenüber der Aufnahme 80, 85 aufweisen, sodass sich umfangsseitig der erste Abschnitt 140 und/oder der dritte Abschnitt 150 mit der Aufnahme 80, 85 verklemmt.

Figur 9 zeigt einen Ausschnitt einer perspektivischen Ansicht des in den Figuren 1 bis 6 gezeigten Pendelmassenteils 45, 50. Figur 10 zeigt eine Draufsicht auf das in Figur 9 gezeigte Pendelmassenteil 45, 50.

An der Seitenfläche 90, 95 angrenzend ist der Aufnahmeabschnitt 125, 130 angeordnet. Der Aufnahmeabschnitt 125, 130 weist eine innere Umfangsfläche 160 auf. Das Pendelmassenteil 45, 50 weist eine Öffnung 165 auf, die sich in axialer Richtung erstreckt und in der Ausführungsform als Bohrung ausgebildet ist. Die Öffnung 165 ist angrenzend an die Aufnahme 80, 85 in der Pendelmasse 25 angeordnet und mündet vorteilhafterweise an der inneren Umfangsfläche 160 des Aufnahmeabschnitts 125, 130.

Üblicherweise werden die Pendelmassenteile 45, 50 mittels eines Stanzverfahrens hergestellt. Im Anschluss an das Stanzverfahren wird der Aufnahmeabschnitt 125, 130 mittels eines Prägeverfahrens in die Pendelmassenteile 45, 50 eingebracht. Dies hat den Vorteil, dass eine Masse der Pendelmassenteile 45, 50 aufrechterhalten werden kann und gegenüber bekannten Pendelmassen somit die Pendelmassenteile 45, 50 eine größere Masse aufweisen können. Beim Einprägen der Aufnahmeabschnitte 125, 130 fließt das Material der Pendelmassenteile 45, 50 zumindest teilweise in die Öffnung 165, sodass diese sich beim Einprägen des Aufnahmeabschnitts 125, 130 in ihrem Querschnitt verformt. Auf diese Weise wird sichergestellt, dass die Pendelmassenteile 45, 50 ihre vordefinierte Form aufweisen. Insbesondere kann durch das Fließen des Materials in die Öffnung 165 vermieden werden, dass das Material der Pendelmassenteile 45, 50 unkontrolliert beim Einprägen der Aufnahmeabschnitte 125, 130 verläuft. Auf diese Weise kann eine besonders hoch präzise Pendelmasse 20, 25 bereitgestellt werden. Ferner wird dadurch vermieden, dass ein zusätzlicher Fertigungsaufwand für ein Anfasen, Schleifen, Fräsen der Pendelmassenteile 45, 50 verwendet wird. Die Öffnung 165 hat ferner den Vorteil, dass ein Beschneiden der Seitenflächen 90, 95 vermieden werden kann, um einen Prägeaufwurf beim Nichtvorhandensein der Öffnung 165 bzw. einen möglicherweise beim Einprägen der Aufnahmeabschnitte 125, 130 entstehenden Überstand zu vermeiden. Durch die einfache Fertigung der Pendelmassenteile 45, 50 und der Koppeleinrichtung 35 kann somit das Fliehkraftpendel 10 besonders kostengünstig hergestellt werden. Ferner wird durch die Koppeleinrichtung 35 eine gezielte Federführung und Positionierung sowohl axial als auch radial der Pendelmassenteile 45, 50 als auch des Federelements 75 gewährleistet. Dadurch, dass das Federelement 75 im zweiten Abschnitt 145 einen kleineren Durchmesser aufweist, als der erste und der dritte Abschnitt 140, weist im zweiten Abschnitt 145 das Federelement 75 keinen Berührkontakt mit der inneren Umfangsfläche 160 der Aufnahme 80, 85 auf. Ferner erfolgt das Federn des Federelements 75 durch die in Figuren 7 und 8 beschriebene Ausgestaltung des Federelements 75 ausschließlich im zweiten Abschnitt 145 und auf Grund des vermiedenen Berührkontakts reibungsfrei und somit auch verschleißfrei mit der Pendelmasse 25. Somit wird auch vermieden, dass Partikel durch den Verschleiß des Federelements 75 in einen Kühlkreislauf, beispielsweise einer nassen Kupplung oder eines Torsionsschwingungsdämpfers, gebracht werden.

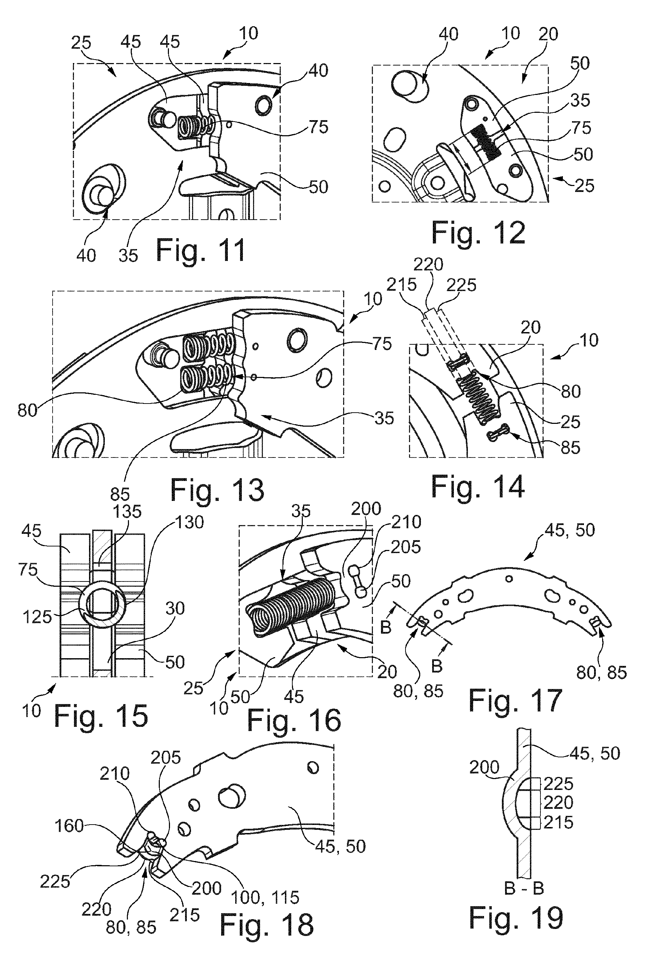

Figur 11 zeigt einen Ausschnitt einer perspektivischen Ansicht des in den Figuren 1 bis 5 gezeigten Fliehkraftpendels in ausgelenktem Zustand und Figur 12 zeigt eine Draufsicht auf das in den Figuren 1 bis 5 gezeigte Fliehkraftpendel 10 in einer Endposition der Pendelmassen 25. Das Federelement 75 weist, wenn es vollständig gestaucht wird (vgl. Figur 12), sodass alle Windungen 155 einen Berührkontakt zu den nächsten Windungen 155 aufweisen, eine Blocklänge I_{B} auf. Dabei ist von besonderem Vorteil, wenn die Blocklänge I_{B} größer ist als ein ohne des Federelements 75 möglicher minimaler Abstand des ersten Aufnahmegrunds 100 zu dem zweiten Aufnahmegrund 115. Dadurch wird ein direktes Anschlagen, insbesondere bei einem maximalen Schwingwinkel der Pendelmassen 20, 25 beim Pendeln entlang der Pendelbahn 60 an den jeweiligen Seitenflächen 90, 95, vermieden. Dabei ist von Vorteil, wenn der zweite Abschnitt 145 des Federelements 75 in der Ruheposition 65 der Pendelmassen 20, 25 zumindest teilweise axial überlappend angeordnet ist, sodass gewährleistet ist, dass bei einem maximalen Schwingwinkel der Pendelmassen 20, 25 die Blocklänge I_{B} des Federelements 75 größer ist als ein Abstand der Seitenflächen 90, 95 der Pendelmassen 20, 25.

Figur 13 zeigt einen Ausschnitt einer perspektivischen Ansicht eines Fliehkraftpendels10 gemäß einer zweiten Ausführungsform. Das Fliehkraftpendel 10 ist im Wesentlichen identisch zu dem in den Figuren 1 bis 12 gezeigten Fliehkraftpendel 10 ausgebildet. Abweichend dazu weist die Koppeleinrichtung 35 zwei Federelemente 75 auf, die in jeweils für das Federelement 75 vorgesehenen Aufnahmen 80, 85 angeordnet sind. Die Federelemente 75 und. die Aufnahme 80, 85 der Koppeleinrichtung 35 sind dabei parallel zueinander ausgerichtet und radial nebeneinander angeordnet. In der Ausführugungsform sind die Federelemente 75 und die Aufnahme 80, 85 in Umfangsrichtung überschneidend und in radialer Richtung versetzt zueinander angeordnet. Dadurch kann bei geringem Bauraum besonders steife Ausgestaltung des Federelements 75 eine besonders hohe Kraft aufnehmende Koppeleinrichtung 35 bereitgestellt werden. Dadurch kann die Federrate der Koppeleinrichtung 35 gesteigert werden. Selbstverständlich ist auch denkbar, dass weitere Federelemente 75 mit weiteren Aufnahmen 80, 85 vorgesehen sind.

Figur 14 zeigt einen Ausschnitt einer Draufsicht auf ein Fliehkraftpendel 10 gemäß einer dritten Ausführungsform. Figur 15 zeigt einen Ausschnitt eines Längsschnitt durch das in Figur 14 gezeigte Fliehkraftpendel 10. Figur 16 zeigt eine perspektivische Ansicht des in den Figuren 14 und 15 gezeigten Fliehkraftpendels 10. Figur 17 zeigt eine Draufsicht auf ein Pendelmassenteil 45, 50 des in den Figuren 14 bis 16 gezeigten Fliehkraftpendels 10. Figur 18 zeigt eine perspektivische Ansicht des in Figur 17 gezeigten Pendelmassenteils 45, 50. Figur 19 zeigt eine Schnittansicht entlang einer in Figur 17 gezeigten Schnittebene B-B. Nachfolgend sollen die Figuren 14 bis 19 gemeinsam erläutert werden.

Das Fliehkraftpendel 10 ist im Wesentlichen identisch zu dem in den Figuren 1 bis 12 gezeigten Fliehkraftpendel 10 ausgebildet. Abweichend dazu ist die Ausgestaltung der Koppeleinrichtung 35 gegenüber der in den Figuren 1 bis 12 gezeigten Koppeleinrichtung 35 . Das Federelement 75 ist gegenüber der in den Figuren 1 bis 13 gezeigten Ausgestaltung vereinfacht ausgebildet und weist über die Abschnitte 140, 145, 150 den gleichen Außendurchmesser auf. Dadurch kann das Federelement 75 besonders kostengünstig hergestellt werden.

Die Aufnahme 80, 85 der Koppeleinrichtung 35 ist gegenüber der in den Figuren 1 bis 13 gezeigten Aufnahme 80, 85 dahingehend variiert, dass die Aufnahme 80, 85 einen Aufnahmesteg 200 aufweist. Der Aufnahmesteg 200 erstreckt sich im Wesentlichen in radialer Richtung. Zwischen dem Aufnahmesteg 200 und dem Aufnahmegrund 100, 115 ist eine weitere Aussparung 205 vorgesehen. Die weitere Aussparung 205 weist dabei jeweils beidseitig des Aufnahmegrunds 100, 115 radial innen- und außenseitig jeweils einen Freischnitt 210 auf, um eine definierte Anlagefläche für das Längsende 110, 120 des Federelements 75 am Aufnahmegrund 100, 115 zu gewährleisten.

Der Aufnahmesteg 200 weist einen ersten Stegabschnitt 215,einen zweiten Stegabschnitt 220 und einen dritten Stegabschnitt 225 auf (vgl. Figur 19). Am ersten Stegabschnitt 215 ist der Aufnahmesteg 200 radial innenseitig mit dem Pendelmassenteil 45, 50 verbunden. Radial außenseitig ist am dritten Stegabschnitt 225 der Aufnahmesteg 200 mit dem Pendelmassenteil 45, 50 verbunden. Zwischen dem ersten Stegabschnitt 215 und dem dritten Stegabschnitt 225 ist der zweite Stegabschnitt 220 angeordnet. Der Aufnahmesteg 200 erstreckt sich dabei im Wesentlichen in radialer Richtung. In Umfangsrichtung ist der zweite Stegabschnitt 220 breiter als der erste Stegabschnitt 215 und der dritte Stegabschnitt 225 ausgebildet. Dies resultiert darin, dass beim Einprägen der Aufnahmeabschnitte 125, 130 im zweiten Stegabschnitt 220 das Material des Aufnahmestegs 200 stärker verformt wird als im ersten dritten Stegabschnitt 215, 225. Durch die weitere Aussparung 205 wird das Fließen des Materials beim Einprägen des Aufnahmeabschnitts 125, 130 in den Aufnahmesteg 200 ermöglicht, sodass ein unkontrolliertes Fließen des Materials vermieden wird. Dadurch kann eine besonders hohe Fertigungspräzision gewährleistet werden.

Es wird darauf hingewiesen, dass die in den Figuren 1 bis 19 gezeigten Merkmale des Fliehkraftpendels 10 selbstverständlich miteinander kombiniert werden können. So ist beispielsweise denkbar, dass die in den Figuren 14 bis 18 beschriebene Ausgestaltung der Aufnahme 80, 85 auch bei der in Figur 13 gezeigten Ausgestaltung des Fliehkraftpendels 10 zumindest für eine der Aufnahmen 80, 85 angewandt wird. Ferner wird darauf hingewiesen, dass auch nur eine der Aufnahmen 80, 85 in axialer Richtung geöffnet sein kann, die andere hingegen frei sein kann.

### Bezugszeichenliste

- 10: Fliehkraftpendel
- 15: Drehachse
- 20: erste Pendelmasse
- 25: zweite Pendelmasse
- 30: Pendelflansch
- 35: Koppeleinrichtung
- 40: Führungseinrichtung
- 45: erstes Pendelmassenteil
- 50: zweites Pendelmassenteil
- 55: Verbindungselement
- 60: Pendelbahn
- 65: Ruheposition
- 70: ausgelenkte Position
- 75: Federelement
- 80: erste Aufnahme
- 85: zweite Aufnahme
- 90: erste Seitenfläche
- 95: zweite Seitenfläche
- 100: erster Aufnahmegrund
- 110: erstes Längsende
- 115: zweiter Aufnahmegrund
- 120: zweites Längsende
- 125: erster Aufnahmeabschnitt
- 130: zweiter Aufnahmeabschnitt
- 135: erste Aussparung
- 140: erster Abschnitt
- 145: zweiter Abschnitt
- 150: dritter Abschnitt
- 155: Windung
- 160: innere Umfangsfläche
- 165: Öffnung
- 200: Aufnahmesteg
- 205: zweite Aussparung
- 210: Freischnitt
- 215: erster Stegabschnitt
- 220: zweiter Stegabschnitt
- 225: dritter Stegabschnitt

## Patentansprüche

1. Fliehkraftpendel (10), das drehbar um eine Drehachse (15) lagerbar ist,
- aufweisend eine erste Pendelmasse (20), eine zweite Pendelmasse (25), einen Pendelflansch (30) und eine Koppeleinrichtung (35),
- wobei die erste Pendelmasse (20) in Umfangsrichtung angrenzend an die zweite Pendelmasse (25) angeordnet ist,
- wobei die erste Pendelmasse (20) und die zweite Pendelmasse (25) beschränkt beweglich mit dem Pendelflansch (30) gekoppelt sind,
- wobei die Koppeleinrichtung (35) zwischen der ersten Pendelmasse (20) und der zweiten Pendelmasse (25) zur Koppelung der ersten Pendelmasse (20) mit der zweiten Pendelmasse (25) angeordnet ist,
- wobei die Koppeleinrichtung (35) wenigstens ein Federelement (75) umfasst,
- wobei ein erstes Längsende (110) des Federelements (75) an der ersten Pendelmasse (20) und ein zweites Längsende (120) an der zweiten Pendelmasse (25) anliegt,
- wobei ein erster Querschnitt des Federelements (75) an wenigstens einem der beiden Längsenden (110, 120) größer ist als ein zweiter Querschnitt zwischen den beiden Längsenden (110, 120).

2. Fliehkraftpendel (10), das drehbar um eine Drehachse (15) lagerbar ist,
- aufweisend eine erste Pendelmasse (20), eine zweite Pendelmasse (25), einen Pendelflansch (30) und eine Koppeleinrichtung (35),
- wobei die erste Pendelmasse (20) in Umfangsrichtung angrenzend an die zweite Pendelmasse (25) angeordnet ist,
- wobei die erste Pendelmasse (20) und die zweite Pendelmasse (25) beschränkt beweglich mit dem Pendelflansch (30) gekoppelt sind,
- wobei die Koppeleinrichtung (35) zwischen der ersten Pendelmasse (20) und der zweiten Pendelmasse (25) zur Koppelung der ersten Pendelmasse (20) mit der zweiten Pendelmasse (25) angeordnet ist,
- wobei die Koppeleinrichtung (35) wenigstens ein Federelement (75) umfasst,
- wobei die Koppeleinrichtung (35) in der ersten Pendelmasse (20) und/oder in der zweiten Pendelmasse (25) eine Aufnahme (80, 85) aufweist,
- wobei die Aufnahme (80, 85) zumindest teilweise das Federelement (75) aufnimmt,
- wobei die Aufnahme (80, 85) zumindest teilweise in axialer Richtung geschlossen ist.

3. Fliehkraftpendel (10) nach Anspruch 1 oder 2,
- wobei das Federelement (75) einen ersten Abschnitt (140, 150) und einen zweiten Abschnitt (145) aufweist,
- wobei der erste Abschnitt (140, 150) an das Längsende (110, 120) angrenzt und der zweite Abschnitt (145) angrenzend an den ersten Abschnitt (140, 150) angeordnet ist,
- wobei jeder Abschnitt (140, 145, 150) mehrere Windungen (155) umfasst,
- wobei die Windungen (155) im ersten Abschnitt (140, 150) in Umfangsrichtung aneinander anliegen,
- wobei die Windungen (155) im zweiten Abschnitt (145) in Umfangsrichtung beabstandet zueinander angeordnet sind.

4. Fliehkraftpendel (10) nach Anspruch 3,
- wobei im ersten Abschnitt (140, 150) die Windungen (155) zumindest abschnittsweise spiralförmig ausgebildet sind,
- wobei im zweiten Abschnitt (145) die Windungen (155) schraubenförmig ausgebildet sind.

5. Fliehkraftpendel (10) nach einem der Ansprüche 2 bis 4,
- wobei die erste und/oder die zweite Pendelmasse (20, 25) ein Pendelmassenteil (45) und ein weiteres Pendelmassenteil (50) aufweist,
- wobei das Pendelmassenteil (45) und das weitere Pendelmassenteil (50) beidseitig des Pendelflanschs (30) angeordnet und mittels wenigstens eines Verbindungselements (55) miteinander verbunden sind,
- wobei die Aufnahme (80, 85) im Pendelmassenteil (45) einen Aufnahmeabschnitt (125) und im weiteren Pendelmassenteil (50) einen weiteren Aufnahmeabschnitt (130) aufweist,
- wobei die Aufnahmeabschnitte (125, 130) axial gegenüberliegend angeordnet sind,
- wobei zwischen den Aufnahmeabschnitten (125, 130) der Pendelflansch (30) eine Aussparung (135) aufweist,
- wobei das Federelement (75) die Aussparung (135) durchgreift und in Aufnahmeabschnitte (125, 130) eingreift.

6. Fliehkraftpendel (10) nach Anspruch 5,
- wobei das Verbindungselement (55) benachbart zu der Aufnahme (80, 85) angeordnet ist,
- wobei vorzugsweise das Verbindungselement (55) radial außenseitig und/oder radial innenseitig angrenzend an die Aufnahme (80, 85) angeordnet ist,
- wobei vorzugsweise das Verbindungselement (55) in Umfangsrichtung angrenzend an die Aufnahme (80, 85) angeordnet ist.

7. Fliehkraftpendel (10) nach Anspruch 5 oder 6,
- wobei die erste und/oder zweite Pendelmasse (20, 25) eine in axialer Richtung verlaufende Öffnung (165) aufweist,
- wobei die Öffnung (165) ausgebildet ist, sich während Herstellung der Koppeleinrichtung (35) in ihrem Querschnitt zu verformen,
- wobei vorzugsweise die Öffnung (165) angrenzend an die Aufnahme (80, 85) angeordnet ist.

8. Fliehkraftpendel (10) nach einem der Ansprüche 2 bis 7,
- wobei die Aufnahme (80, 85) einen in Umfangsrichtung die Aufnahme (80, 85) begrenzenden Aufnahmegrund (100, 115) und in axialer Richtung die Aufnahme (80, 85) begrenzenden Aufnahmesteg (200) umfasst,
- wobei an dem Aufnahmegrund (100, 115) das Längsende (110, 120) des Federelements (75) anliegt und dem Aufnahmesteg (200) eine Umfangsfläche des Federelements (75) zugewandt ist,
- wobei zwischen dem Aufnahmegrund (100, 115) und dem Aufnahmesteg (200) eine weitere Aussparung (205) angeordnet ist.

9. Fliehkraftpendel (10) nach Anspruch 8,
- wobei der Aufnahmesteg (200) einen ersten Stegabschnitt (215, 225) und wenigstens einen zweiten Stegabschnitt (220) aufweist,
- wobei erste Stegabschnitt (215, 225) mit der ersten oder zweiten Pendelmasse (20, 25) verbunden ist,
- wobei der zweite Stegabschnitt (220) radial angrenzend an den ersten Stegabschnitt (215, 225) angeordnet ist,
- wobei in Umfangsrichtung der zweite Stegabschnitt (220) breiter ausgebildet ist als der erste Stegabschnitt (215, 225),
- wobei vorzugsweise in axialer Richtung der zweite Stegabschnitt (220) schmaler ausgebildet ist als der erste Stegabschnitt (215, 225).

10. Fliehkraftpendel (10) nach einem der Ansprüche 2 bis 9,
- wobei in gestauchtem Zustand das Federelement (75) eine Blocklänge (I_{B}) aufweist,
- wobei in der ersten Pendelmasse (20) die Koppeleinrichtung (35) die Aufnahme (80) und in der zweiten Pendelmasse (25) eine weitere Aufnahme (85) aufweist,
- wobei die Aufnahmen (80, 85) in Umfangsrichtung gegenüberliegend angeordnet sind,
- wobei die Aufnahme (80) einen Aufnahmegrund (100) und die weitere Aufnahme (80, 85) einen weiteren Aufnahmegrund (115) aufweist,
- wobei ein Minimalabstand der Aufnahmegründe (100, 115) zueinander größer als die Blocklänge(I_{B}) ist.
